# EUROPÄISCHE PATENTSCHRIFT

(11) **EP 3 818 583 B1**
(45) Veröffentlichungstag und Bekanntmachung des Hinweises auf die Patenterteilung: **26.01.2022**
(21) Anmeldenummer: 19740317.3
(22) Anmeldetag: 01.07.2019
(51) Int. Cl.: H01M 8/18

(54) **VERWENDUNG EINES ELEKTROLYTEN IN EINER FLUSSBATTERIE UND FLUSSBATTERIE**
USE OF AN ELECTROLYTE IN A REDOX FLOW BATTERY AND REDOX FLOW BATTERY
UTILISATION D'ÉLECTROLYTE DANS UNE BATTERIE À FLUX ET BATTERIE À FLUX

(30) Priorität: 05.07.2018 DE 102018116293
(43) Veröffentlichungstag der Anmeldung: 12.05.2021
(73) Patentinhaber: Albert-Ludwigs-Universität Freiburg, 79098 Freiburg (DE)
(72) Erfinder: KROSSING, Ingo, 79114 Freiburg (DE); BURGENMEISTER, Simeon, Benedikt, 79106 Freiburg (DE); SCHMUCKER, Maximilian, 79106 Freiburg (DE)
(74) Vertreter: Geskes, Christoph
(86) Internationale Anmeldenummer: PCT/EP2019/067526
(87) Internationale Veröffentlichungsnummer: WO 2020/007763

(56) Entgegenhaltungen:
- EP-A1- 2 387 092
- JP-A- 2010 244 972
- US-A1- 2012 115 069
- US-A1- 2015 111 117

## Beschreibung

Die vorliegende Erfindung betrifft eine Flussbatterie als auch die Verwendung mindestens eines Elektrolyten umfassend ein spezifisches Salz in einer solchen Flussbatterie.

Flussbatterien, die auch als Redox-Flussbatterien oder allgemeiner im Englischen als Redox-Flow-Batterien (RFB) bekannt sind, sind eine spezifische Ausführungsform eines Akkumulators. Eine Flussbatterie speichert elektrische Energie in chemischen Verbindungen. Üblicherweise liegen die Reaktionspartner in einem Lösemittel in gelöster Form vor. Bei den aus dem Stand der Technik bekannten Flussbatterien werden die Reaktionspartner in getrennten Kreisläufen geführt, wobei diese über eine Membran zum Zwecke eines lonenaustausches verbunden sind. In aller Regel werden Pumpen zur Umwälzung der Elektrolyte, die die Reaktionspartner in einem Lösemittel enthalten, benötigt. Bekannt sind Flusszellen auf der Basis von Vanadium, Natriumbromid oder Zink/Brom. Auch sind solche auf Grundlage organischer Chinone bekannt, durch die die Kosten gesenkt werden sollen, da die vorgenannten anorganischen Verbindungen zumindest teilweise kostenintensiv sind. Auch sind Flusszellen auf Basis der Reaktionspartner Eisen und Zink, die sehr kostengünstig sind, bekannt geworden.

US 2015/0111117 A1 offenbart ein Elektrolytsystem für eine Hybridstrombatterie auf Manganbasis umfassend einen Anolyten, der Mn2⁺ und Mn³⁺ enthält, und einen Katholyten, der Mn²⁺ und Mn⁰ enthält.

EP 2 387 092 A1 offenbart eine Redox-Flow-Batterie, die einen positiven Elektroden-Elektrolyten und einen negativen Elektroden-Elektrolyten einer Batteriezelle zuführen, die eine positive Elektrode, eine negative Elektrode und eine zwischen den Elektroden angeordnete Membran enthält, um die Batterie zu laden und zu entladen, wobei der positive Elektroden-Elektrolyt ein Mangan-Ion enthält, der negative Elektroden-Elektrolyt mindestens eine Art von Metallion enthält, das aus einem Titan-Ion, einem Vanadium-Ion, einem Chrom-Ion, einem Zink-Ion und einem Zinn-Ion ausgewählt ist, wobei die Redox-Flow-Batterie ein Niederschlags-Unterdrückungsmittel zum Unterdrücken der Niederschläge von MnO₂ umfasst.

Die vorliegende Erfindung stellt sich die Aufgabe, eine Flussbatterie zur Verfügung zu stellen, die kostengünstig betrieben werden kann und einen einfachen Aufbau aufweist.

Diese Aufgabe wird gelöst durch eine erfindungsgemäße Flussbatterie mit einer anodischen Halbzelle mit Mangan in einer Oxidationsstufe kleiner oder gleich +II und mit einer kathodischen Halbzelle mit Mangan in einer Oxidationsstufe größer gleich +II, wobei die Oxidationsstufen des Mangan in der anodischen Halbzelle und in der kathodischen Halbzelle sich im geladenen Zustand unterscheiden, wobei die Flussbatterie einen Elektrolyten umfasst, dieser umfassend mindestens ein Salz mit der allgemeinen Formel [cat]₂[MnHalₙ], wobei [cat] ⁺ für Kation und "Hal" für Sauerstoff, Cyanid, mindestens ein Halogen oder Mischungen dieser steht, n gleich 3, 4 oder 5 ist und für die Anzahl der sich an das Manganatom bindenden Atome steht, und mindestens ein organisches Lösemittel, wobei das Kation [cat]⁺ ausgewählt ist aus einer Gruppe umfassend Ammoniumkationen und/oder Phosphoniumkationen und wobei Mangan sich in der anodischen Halbzelle abscheidet. Im ungeladenen Zustand sind die Oxidationsstufen in der kathodischen Halbzelle und in der anodischen Halbzelle gleich und betragen +II.

Die erfindungsgemäße Flussbatterie weist den großen Vorteil auf, dass in dieser ausschließlich Manganverbindungen als Reaktionspartner eingesetzt werden, so dass kein zweiter Reaktionspartner aus einem anderen Material notwendig ist. Mangan ist ausgesprochen kostengünstig, so dass die Herstellungskosten der erfindungsgemäßen Flussbatterie sehr gering sind. In der anodischen Halbzelle erfolgt eine Reduktion der eingesetzten Manganverbindung zu elementarem Mangan, d. h. Mangan in einer Oxidationsstufe 0 (null). Mangan scheidet sich in der anodischen Halbzelle, und dort bevorzugt an der in dieser angeordneten mindestens einen Elektrode, ab. Daher kann man im Sinne der vorliegenden Erfindung auch von einer hybriden Flussbatterie sprechen, denn die auf Manganverbindungen beruhenden Reaktionspartner liegen sowohl in fester als auch in gelöster Form in den Halbzellen der erfindungsgemäßen Flussbatterie im geladenen Zustand vor. Da zudem bevorzugt identische Manganverbindungen in der anodischen Halbzelle als auch der kathodischen Halbzelle als Reaktionspartner eingesetzt werden, kann auch auf den Einsatz einer Membran zum lonenaustausch, oder aber alternativ eines porösen Separators verzichtet werden. Hierdurch sinken die Produktionskosten der erfindungsgemäßen Flussbatterie weiter. Auch kann ggf. aufgrund des hybriden Charakters der erfindungsgemäßen Flussbatterie auf die Vorsehung von Pumpen verzichtet werden, zumindest teilweise, was die Herstellungskosten der erfindungsgemäßen Flussbatterie weiter senkt. Es können erfindungsgemäß auch Mischungen von zwei oder mehr Manganverbindungen in der Flussbatterie eingesetzt werden. Auch können in der anodischen und der kathodischen Halbzelle unterschiedliche Manganverbindungen oder Mischungen dieser eingesetzt werden.

Erfindungsgemäß umfasst die Flussbatterie einen Elektrolyten, wobei dieser wiederum umfasst mindestens ein Salz mit der allgemeinen Formel [cat]₂[MnHalₙ], wobei [cat] für Kation und "Hal" für Sauerstoff, Cyanid, mindestens ein Halogen oder Mischungen dieser steht, wobei der Elektrolyt weiterhin mindestens ein organisches Lösemittel umfasst. n ist gleich 3, 4 oder 5 und steht für die Anzahl der sich an das Manganatom bindenden Atome, beispielsweise vier Chloratome, dann ist n gleich 4, oder zwei Chloratome und ein Sauerstoffatom, dann ist n gleich 3. Besonders bevorzugt im Sinne der vorliegenden Erfindung wird genau ein Elektrolyt, umfassend mindestens ein Salz mit der allgemeinen Formel [cat]₂[MnHalₙ], wie vorstehend definiert, eingesetzt. Die Reaktionen in der anodischen Halbzelle und in der kathodischen Halbzelle, am Beispiel des Anions [MnCl₄]²⁻ laufen dabei wie folgt ab:

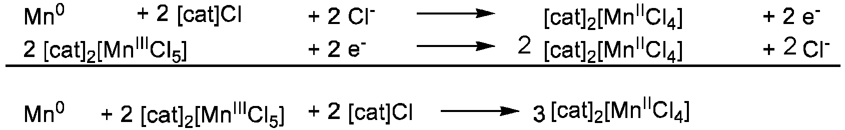

Im geladenen Zustand der erfindungsgemäßen Flussbatterie befindet sich in der anodischen Halbzelle elementares Mangan in der Oxidationsstufe 0 (null), welches zu einer Manganverbindung mit der Oxidationsstufe +II oxidiert wird. Dabei liegt ein 2-Elektronen-Transfer vor. Das Anion [MnCl₄]²⁻ wird gebildet. In der kathodischen Halbzelle erfolgt eine Reduktion einer Manganverbindung in der Oxidationsstufe +III, z. B. in Form des Anions [MnCl₅]²⁻, welches über eine 1-Elektronen-Reduktion zu einer Manganverbindung mit dem Anion [MnCl₄]²⁻ reduziert wird.

Erfindungsgemäß ist das Kation [cat]⁺ ein symmetrisches oder ein asymmetrisches Kation. Insbesondere ist das Kation [cat]⁺ ein solches Kation, das zusammen mit dem manganhaltigen Anion eine ionische Flüssigkeit bildet. Erfindungsgemäß ist das Kation [cat]⁺ ausgewählt aus einer Gruppe umfassend Ammoniumkationen und/oder Phosphoniumkationen. Es können im Sinne der vorliegenden Erfindung insbesondere auch Mischungen aus Ammoniumkationen und Phosphoniumkationen und damit Mischungen verschiedener Salze im Elektrolyten der erfindungsgemäßen Flussbatterie vorgesehen sein. Besonders bevorzugt weist das Ammoniumkation und/oder das Phosphoniumkation die allgemeine Formel N[abcd]⁺ im Falle von Ammoniumkationen und P[abcd]⁺ im Falle von Phosphoniumkationen auf. Bei diesen allgemeinen Formeln steht a, b, c, d, für lineare oder verzweigte Alkylsubstituenten oder Arylsubstituenten mit 1 bis 14 Kohlenstoffatomen, wobei in den genannten Substituenten die Heteroatome O, N und P vorkommen können, beispielsweise in Form von Ethergruppen. a, b, c, und d können dabei insbesondere auch identisch sein, wobei dann hierdurch symmetrische Kationen definiert sind. Ein beispielhaftes symmetrisches Kation wäre N[2222]⁺, wodurch ein Ammoniumkation mit vier Ethylgruppen beschrieben ist. Alternativ weist das Ammoniumkation und/oder Phosphoniumkation die allgemeine Formel N[xyz]⁺ im Falle von Ammoniumkationen und P[xyz]⁺ im Falle von Phosphoniumkationen auf, wobei x und y für lineare oder verzweigte Alkylsubstituenten oder Arylsubstituenten mit 1 bis 14 Kohlenstoffatomen und z für einen zyklischen Alkylsubstituenten mit 4 bis 8 Kohlenstoffatomen steht, wobei in den vorgenannten Substituenten wiederum die Heteroatome O, N und P vorkommen können, beispielsweise in Form von Ethergruppen. Beispiele für zyklische Alkylsubstituenten z sind Pyrrolidine, die vier Kohlenstoffatome aufweisen, wodurch im Ammoniumkation zwei Valenzen besetzt sind, so dass die beiden anderen Valenzen durch die weiteren Substituenten x und y besetzt werden können. Im Sinne der vorliegenden Erfindung ist es im Übrigen nicht ausgeschlossen, dass die linearen oder verzweigten Alkylsubstituenten mindestens eine Doppelbindung, bevorzugt mindestens zwei Doppelbindungen aufweisen. Besonders bevorzugt im Sinne der vorliegenden Erfindung weisen die linearen oder verzweigten Alkylsubstituenten a, b, c, d, x und y in den vorgenannten allgemeinen Formeln im Falle von linearen oder verzweigten Alkylsubstituenten keine solche Doppelbindungen auf, so dass es sich um gesättigte lineare oder gesättigte verzweigte Alkylsubstituenten handelt. Bevorzugt weist auch der zyklische Substituent z keine Doppelbindungen auf. Insbesondere können auch mehr als ein Heteroatom in den Substituenten vorhanden sein, insbesondere dann, wenn Ethergruppen, die das Heteroatom O aufweisen, vorhanden sind. So können beispielsweise in den linearen Alkylsubstituenten ein, zwei, drei oder mehr Ethergruppen vorgesehen sein.

Besonders bevorzugt ist das Kation [cat]⁺ ausgewählt aus einer Gruppe umfassend mindestens eines der folgenden Kationen:

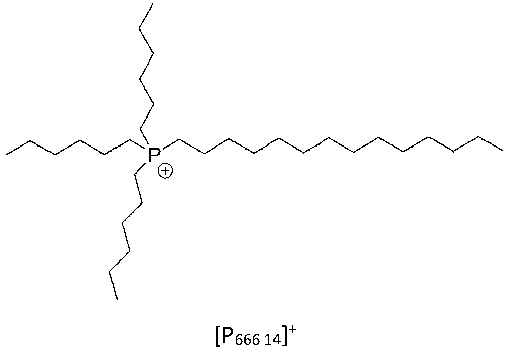

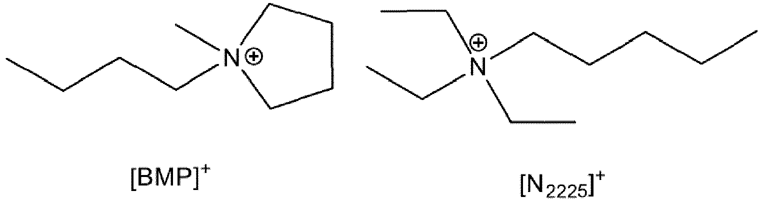

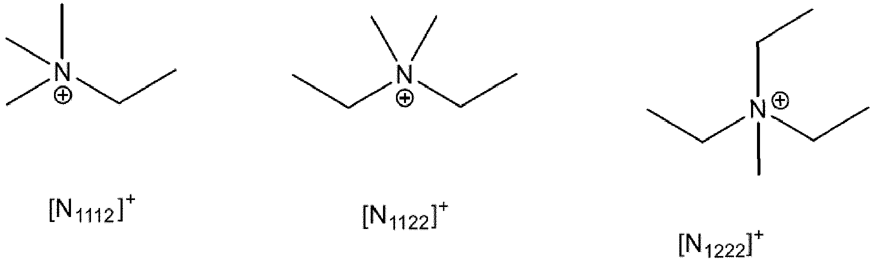

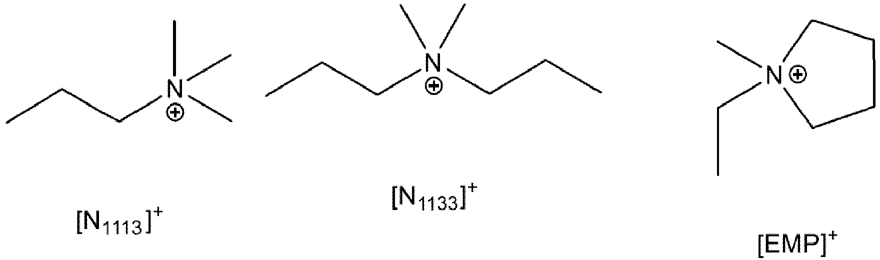

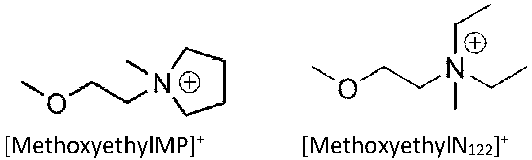

Besonders bevorzugt im Sinne der vorliegenden Erfindung ist dabei der Einsatz der Kationen [BMP]+ und [N2225]⁺. Aber auch Kombinationen dieser oder der Einsatz der weiteren vorstehend ausdrücklich genannten Phosphoniumkationen und Ammoniumskationen ist möglich. Wie jedoch bereits vorstehend erwähnt, können auch symmetrische Kationen, insbesondere [N2222]⁺ und N[4444]⁺, eingesetzt werden.

In einer weiter bevorzugten Ausführungsform der vorliegenden Erfindung ist das Halogen "Hal" der allgemeinen Formel [cat]₂[MnHalₙ] ausgewählt aus einer Gruppe umfassend Fluor, Chlor und/oder Brom, wobei Chlor besonders bevorzugt ist. Im Sinne der vorliegenden Erfindung wird als Anion bevorzugt [MnCl₄]²⁻ eingesetzt. Im ungeladenen Zustand der erfindungsgemäßen Flussbatterie liegt dabei sowohl in der anodischen Halbzelle als auch in der kathodischen Halbzelle im Elektrolyten das Salz [cat]₂[MnHalₙ] vor. Im Sinne der vorliegenden Erfindung können auch Oxohalogenide als Anion vorgesehen sein, beispielsweise [MnOCl₂]²⁻, was der allgemeinen Formel [MnHal₃]²⁻ entspricht. Bevorzugt weist das mindestens eine Salz eine Konzentration im Elektrolyten in einem Bereich von etwa 1M bis etwa 5M, weiter bevorzugt eine Konzentration in einem Bereich von etwa 1,8M bis etwa 3,5M, auf. Es handelt sich damit bei dem Elektrolyten um eine konzentrierte salzhaltige Lösung, einer ionische Flüssigkeit.

Soweit in der vorliegenden Erfindung der Begriff "etwa" in Bezug auf Werte, Wertebereiche oder werthaltige Begriffe verwendet wird, ist hierunter dasjenige zu verstehen, was der Fachmann im gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, weiter bevorzugt +/- 2 %, noch weiter bevorzugt +/- 1 %, von dem Begriff "etwa" umfasst.

In einer bevorzugten Ausführungsform der vorliegenden Erfindung ist das mindestens eine organische Lösemittel, welches zusammen mit dem mindestens einen Salz den Elektrolyten bildet, ausgewählt aus einer Gruppe umfassend Aceton, Acetonitril, Methylcyanoacetat, γ-Butyrolacton, Dimethylsulfoxid (DMSO), Dimethylformamid (DMF), Propylencarbonat, N-Methyl-2-pyrrolidon (NMP), Dimethylpropylenharnstoff (DMPU), Propionitril, Triethylamin, Ethylencarbonat/Dimethylcarbonat (EC/DMC), Dichlormethan, Adiponitril und/oder 3-Methoxypropionitril ausgewählt. Besonders bevorzugt im Sinne der vorliegenden Erfindung wird Acetonitril, DMSO, DMF, NMP und/oder EC/DMC eingesetzt.

In einer weiter bevorzugten Ausführungsform weist die Flussbatterie zwischen der anodischen Halbzelle und der kathodischen Halbzelle mindestens eine Membran und/oder mindestens einen porösen Separator auf. Da bevorzugt im Sinne der vorliegenden Erfindung im ungeladenen Zustand in der anodischen Halbzelle und der kathodischen Halbzelle die Reaktionspartner in der gleichen Oxidationsstufe und weiter bevorzugt identisch sind, muss jedoch eine solche Membran oder ein solcher poröser Separator nicht zwingend vorgesehen sein. Bevorzugt ist die mindestens eine Membran ausgewählt aus einer Gruppe umfassend Anionenaustauschermembrane oder Kationenaustauschermembrane, Nafion, PVDF, PTFE, PE und/oder PP. Es können jedoch auch Vliesmaterialien und poröse Filme und Keramiken eingesetzt werden, beispielsweise poröse Kohlenstoff- oder Graphitfilme. Werden Polyethylene (PE) oder Polypropylene (PP) eingesetzt, werden diese auch in aller Regel in Form von porösen Membranfilmen eingesetzt. Auch Polyvinylidenfluoride (PVDF) und Polytetra-fluorethylene (PTFE) sind als Membranmaterialien besonders gut geeignet, ebenso wie Nafion. Bei Nafion handelt es sich um ein perfluoriertes Copolymer, welches als ionische Gruppe eine Sulfogruppe aufweist. Nafion ist eine eingetragene Marke der Firma DuPont, E.I. du Pont de Nemours and Company bzw. Dow DuPont. Nafion kann auch als 2-[1-[Difluor[(trifluorethenyl)oxy]methyl]-1,2,2,2-tetrafluorethoxy]-1,1,2,2-tetrafluorethansulfonsäure bezeichnet werden. Als keramische Materialien seien beispielhaft Zirkonoxid oder Mikroglasfasern, die beispielsweise als poröser Separator eingesetzt werden können, genannt.

Bevorzugt ist im Sinne der vorliegenden Erfindung in der anodischen Halbzelle und in der kathodischen Halbzelle mindestens eine Elektrode angeordnet. Im Sinne der vorliegenden Erfindung können in den anodischen und kathodischen Halbzellen auch jeweils mehr als eine Elektrode angeordnet sein. Wird mehr als eine Elektrode vorgesehen, werden bevorzugt mehrere identische Elektroden in der anodischen Halbzelle und in der kathodischen Halbzelle angeordnet. Bevorzugt ist die mindestens eine Elektrode gebildet aus mindestens einem Material, ausgewählt aus der Gruppe umfassend Graphit, fluoriertes Graphit, porösen Kunststoff, Kohlenstoffgewebe, Kohlenstofffilz, Komposite aus Kohlenstoff und Polymer, Platin, Kupfer, Gold, Silber und/oder Palladium. Dabei kann im Sinne der vorliegenden Erfindung die mindestens eine Elektrode aus einem oder mehreren der genannten Materialien, die auf einem Träger angeordnet sind, gebildet sein. Beispielsweise kann der Träger aus einem inerten Material gebildet sein, aber auch aus einem leitfähigen Material. Beispielsweise sind Kombinationen von Kupfer als Trägermaterial, beschichtet mit Platin, oder aber ein inerter Kunststoff wie PTFE als Träger, beschichtet mit Platin, solche Ausbildungen, die unter den Gegenstand der vorliegenden Erfindung fallen. Ein beispielhaftes Material für eine Elektrode aus einem Kohlenstoff-Polymerkomposit ist das Material TF6 der SGL Carbon SE, Wiesbaden, Deutschland.

Bevorzugt weist die erfindungsgemäße Flussbatterie ein Potenzial von größer etwa 1,5 V auf. Bevorzugt liegt das Potenzial der Flussbatterie in einem Bereich von etwa 2,6 V bis etwa 4,5 V, weiter bevorzugt in einem Bereich von etwa 2,8 V bis etwa 3,8 V.

Die vorliegende Erfindung betrifft weiterhin die Verwendung mindestens eines Elektrolyten umfassend mindestens ein Salz mit der allgemeinen Formel [cat]₂[MnHalₙ], wobei [cat]⁺ für Kation und "Hal" für Sauerstoff, Cyanid, mindestens ein Halogen oder Mischungen dieser steht und n gleich 3, 4 oder 5 ist und die sich an das Manganatom bindende Anzahl von Atomen definiert, und mindestens ein organisches Lösemittel, wobei das Kation [cat] ⁺ ausgewählt ist aus einer Gruppe umfassend Ammoniumkationen und/oder Phosphoniumkationen, in einer Flussbatterie, in der metallisches Mangan abgeschieden wird. Metallisches Mangan weist die Oxidationsstufe 0 (null) auf und wird im Sinne der vorliegenden Erfindung auch als elementares Mangan angesprochen. Bevorzugt erfolgt die Verwendung des vorgenannten mindestens einen Salzes in einer erfindungsgemäßen Flussbatterie. Der große Vorteil der Verwendung des vorgenannten mindestens einen Salzes ist, dass hierdurch eine Flussbatterie zur Verfügung stellbar ist, die ausschließlich einen Reaktionspartner aufweist, so dass im ungeladenen Zustand in der anodischen und in der kathodischen Halbzelle identische Elektrolyte vorliegen. Zudem wird metallisches Mangan in der anodischen Halbzelle abscheidbar, so dass hierdurch je nach Aufbau der Flussbatterie auf Membrane oder poröse Separatoren verzichtet werden kann. Das mindestens eine vorgenannte Salz stabilisiert dabei wie in einer ionischen Flüssigkeit das Mangan in den Oxidationsstufen größer 0, in welchen dieses in der anodischen Halbzelle und in der kathodischen Halbzelle im geladenen Zustand vorliegt, wobei insbesondere Nebenreaktionen vermieden werden, die zu einer Zersetzung des Elektrolyten führen können. Besonders bevorzugt ist dabei, wie im Zusammenhang mit der vorstehenden Darstellung der erfindungsgemäßen Flussbatterie ausgeführt, das mindestens eine Salz mit der allgemeinen Formel [cat]₂[MnHalₙ] ausgebildet in Hinblick auf das Kation [cat]⁺ und das Anion [MnHalₙ]²⁻, wie dort beschrieben.

Diese und weitere Vorteile der vorliegenden Erfindung werden anhand der nachfolgenden Figuren näher erläutert. Es zeigen:
- Fig. 1:: eine schematische Darstellung einer erfindungsgemäßen Flussbatterie;
- Fig. 2:: ein Cyclovoltammogramm eines Elektrolyten, gebildet aus [BMP]₂[MnCl₄] in Acetonitril (MeCN];
- Fig. 3:: ein Raman-Spektrum des nicht oxidierten Katholyten mit dem Anion [MnCl₄]²⁻und dem oxidierten Katholyten [MnCl₅]²⁻;
- Fig. 4:: ein Pulver-Röngendiffraktogramm (pXRD) von elementarem Mangan, abgeschieden in der anodischen Halbzelle, verglichen mit einem simulierten PulverRöntgendiffraktogramm von Mangan;
- Fig. 5:: ein weiteres Pulver-Röntgendiffraktogramm von oxidiertem elementaren Mangan in Form von Manganoxid im Vergleich zu einer Simulation eines PulverRöntgendiffraktogramms von Manganoxid; und
- Fig. 6:: ein Ladungs-Spannungsdiagramm, erhalten mit einem Elektrolyten bestehend aus [BMP]₂[MnCl₄] in einer Konzentration von 2,4 M in Acetonitril.

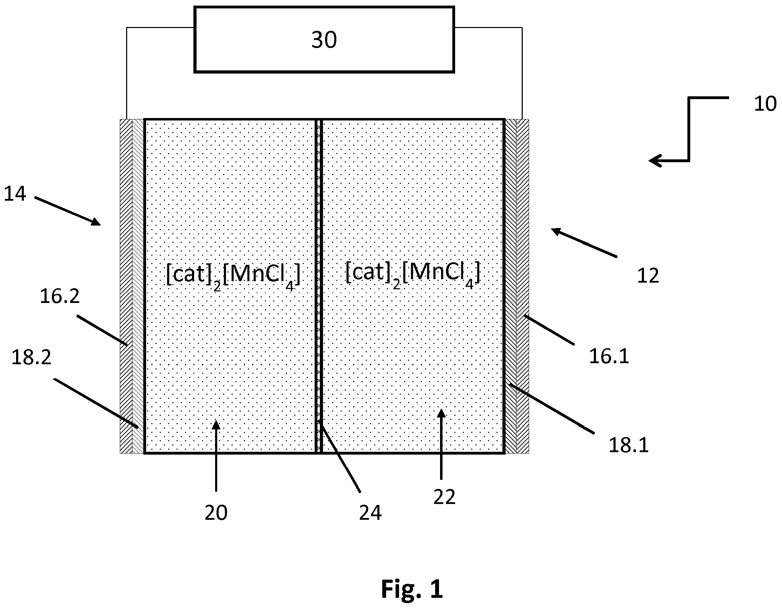

Fig. 1 zeigt in einer schematischen Darstellung eine erfindungsgemäße Flussbatterie 10 mit einer anodischen Halbzelle 20 und einer kathodischen Halbzelle 22 im ungeladenen Zustand. Sowohl in der anodischen Halbzelle 20 als auch in der kathodischen Halbzelle 22 liegt beispielhaft ein Elektrolyt mit der allgemeinen Formel [cat]₂[MnCl₄] vor. Die beiden Halbzellen 20 und 22 sind durch eine Membran 24, beispielsweise eine Nafion-Membran, voneinander separiert. Der anodischen Halbzelle 20 zugeordnet ist eine Elektrode 14 und der kathodischen Halbzelle 22 zugeordnet ist eine Elektrode 12. Beide Elektroden 12 und 14 sind identisch aufgebaut. Sie weisen jeweils eine Lage 16.1 und 16.2 aus Kupfer und darauf aufgebracht eine Lage aus Graphit 18.1 und 18.2 auf. Die Graphitlage ist mit der Kupferlage, die als Stromkollektor wirkt, über ein Silberleitpaste verbindbar. Die anodische Halbzelle 20 und kathodische Halbzelle 22 sind über ihre Elektroden 14 und 12 mit einer Messvorrichtung 30, beispielsweise einem Potentiostaten, verbunden. Über diesen kann die Flussbatterie 10 geladen werden und anschließend die durch die Flussbatterie 10 gewonnene Ladung bzw. Strom gemessen werden. Die Messvorrichtung 30 kann jedoch auch in einer sonstigen Art und Weise ausgebildet sein.

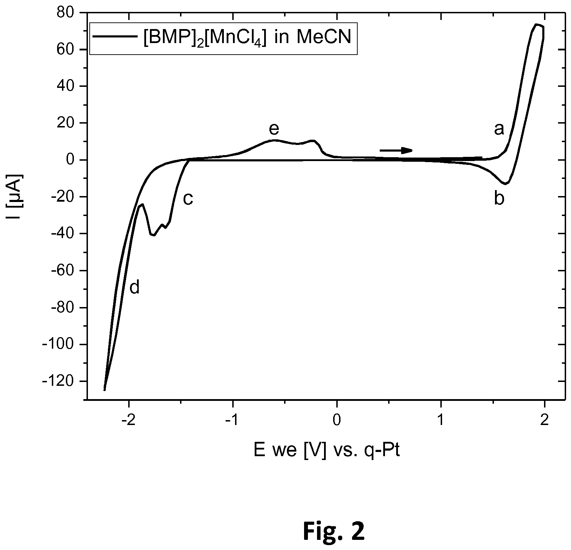

Fig. 2 zeigt nun ein Cyclovoltammogramm einer 2,4 M-Lösung [BMP]₂[MnCl₄] im Lösemittel Acetonitril. Dabei wurde eine Vorschubgeschwindigkeit von 20 mVs⁻¹ verwendet. Die Messung erfolgte bei Raumtemperatur. Als Arbeitselektrode wurde eine Platinscheibenelektrode mit einem Durchmesser von 0,5 mm eingesetzt, als Gegenelektrode ebenfalls eine entsprechend ausgebildete Platinelektrode. Als Referenzelektrode wurde eine Quasi-Platinelektrode (q-Pt), bestehend aus einer Kupferplatte, an welcher ein Platindraht ebenfalls mit einem Durchmesser von 0,5 mm befestigt wurde, eingesetzt. Die Messung wurde unter einer Argon-atmosphäre vorgenommen.

In Fig. 2 ist gut zu erkennen, dass das elektrochemische Fenster, was bei Einsatz von Wasser als Lösemittel bei etwa 1,25 V liegen würde, über 3 V beträgt. Der Stromanstieg an der Stelle a in Fig. 2 betrifft die Oxidation von Mangan (II) zu Mangan (III) in der kathodischen Halbzelle. An der Stelle b in Fig. 2 wird entsprechend umkehrt die Reduktion von Mangan (III) zu Mangan (II) sichtbar. Bei einem Potenzial von etwa -1,4 V an der Stelle c wird die Abscheidung elementaren Mangans in der anodischen Halbzelle sichtbar, wobei die überwiegende Abscheidung von elementarem Mangan nachfolgend an der Stelle d gemäß Fig. 2 bei einem Potenzial von etwa -1,9 V erfolgt. Die Stelle e in Fig. 2 zeigt die Oxidation elementaren Mangans im Umkehr-Sweep zu Mangan (II). Die an den Stellen c, d und e aus dem Cyclovoltammogramm gemäß Fig. 2 sichtbare Abscheidung von elementarem Mangan bzw. dessen Oxidation zu Mangan (II) erfolgt kinetisch gehindert, was durch geeignete Wahl des Lösemittels als auch des mindestens einen Salzes im Elektrolyten optimiert werden kann. Die durch das Cyclovoltammogramm dargestellten Einzelreaktionen sind im Folgenden wiedergegeben, wobei [cat]⁺ für [BMP]⁺ steht:

### Entladung

Mn⁰+2[cat]Cl+2Cl⁻→[cat]₂[Mn^{ll}Cl₄]+2e⁻

2[cat]₂[Mn^{lll}Cl₅]+2e⁻→2[cat]₂[Mn^{ll}Cl₄]+2Cl⁻

### Ladung

[cat[₂[Mn^{ll}Cl₄]+2e⁻→Mn⁰+2[cat]Cl+2Cl⁻

2[cat]₂[Mn^{ll}Cl₄]+2Cl⁻→2[cat]₂[Mn^{lll}Cl₅]+2e⁻

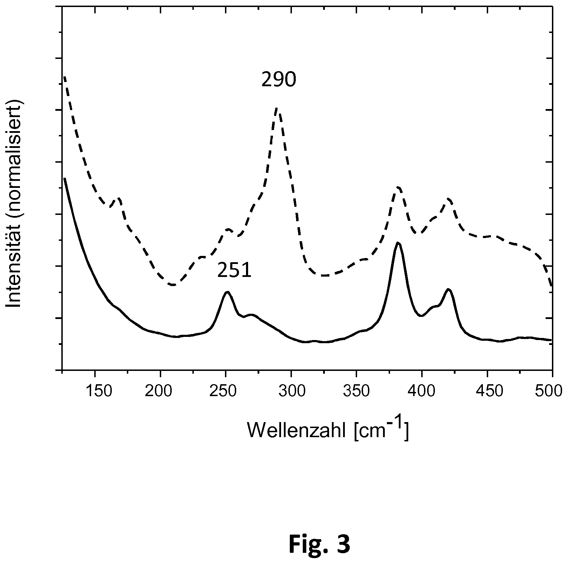

Fig. 3 zeigt ein Raman-Spektrum des nicht oxidierten und des oxidierten Katholyten in der kathodischen Halbzelle. Die vermessenen Proben wurden unter Inertatmosphäre einer Flussbatterie entnommen und schmelzversiegelt in einer Pipette. Die Raman-Spektren wurden mit einem Bruker RAM II-Modul für ein Vertex 70 IR-Spektrometer der Bruker Corporation, Billerica, U.S.A., bei Standardtemperaturen für Temperatur- und Druckvermessen. Für den nicht oxidierten Katholyten wird bei einer Wellenzahl von 251 cm⁻¹ ein Peak sichtbar, der dem [MnCl₄]²⁻-Anion mit Mangan in der Oxidationsstufe 2 zugeschrieben werden kann. Dieses Anion ist in der Flussbatterie, wie beispielhaft in Fig. 1 gezeigt, vorhanden und charakterisiert den ungeladenen Zustand der Batterie. Die während dem Betrieb der Flusszelle mit einer Ladung von 75 % entnommene Probe des oxidierten Katholyten aus der kathodischen Halbzelle zeigt einen deutlich ausgeprägten Peak bei einer Wellenzahl von 290 cm⁻¹, der dem Anion [MnCl₅]²⁻ mit Mangan in der Oxidationsstufe +3 zugeschrieben werden kann. Diese Probe wies zudem eine grüne Farbe auf, die typisch für Verbindungen mit dem Anion [MnCl₅]²⁻ ist.

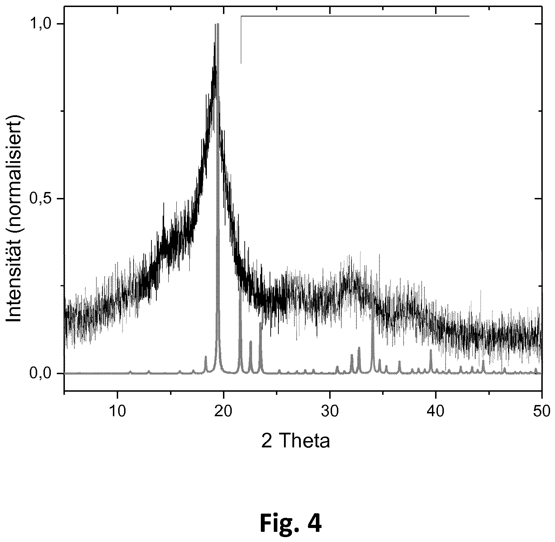

Fig. 4 zeigt ein Pulver-Röntgendiffraktogramm der Abscheidung von elementarem Mangan in der anodischen Halbzelle. Das elementare Mangan wurde dabei gewonnen in Übereinstimmung mit den Versuchsbedingungen, die im Zusammenhang mit den Fig. 1 und 2 vorstehend beschrieben wurden, was ebenso für das Raman-Spektrum gemäß Fig. 3 gilt. Fig. 4 zeigt ein Pulver-Röntgendiffraktogramm des abgeschiedenen Mangans, erhalten unter inerten Bedingungen, wie weiter vorstehend beschrieben, aus einer Flussbatterie in Betrieb. Das erhaltene Pulver-Röntgendiffraktogramm zeigt sehr starke Reflexe, die sich in einer unruhigen Messlinie wiederspiegeln, da mit der Flussbatterie kein kristallines Mangan, insbesondere α-Mangan, erhalten wird. Zum Vergleich wurde daher in Fig. 4 mitaufgenommen eine Simulation eines Pulver-Röntgendiffraktogramms von α-Mangan, wobei für die Simulation das Programm Mercury CSD 3.10 (Build 157083) des Cambridge Crystallographic Data Center. Man erkennt aus Fig. 4 mehr oder weniger, daß das starke Reflexe aufzeigende Pulver-Röntgendiffraktogramm des oxidierten Mangans, als Probe einer Flussbatterie, wie oben im Zusammenhang mit den Fig. 1 und 2 beschrieben, entnommen, mehr oder weniger mit den scharfen Signalen des simulierten Pulver-Röntgendiffraktogramms von α-Mangan korreliert.

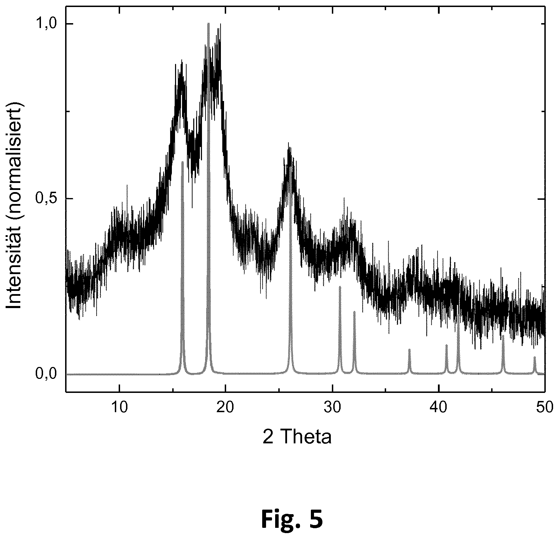

Um eine indirekte Bestimmung der Abscheidung von Mangan in der anodischen Halbzelle durchzuführen, wurde ebenfalls ein Pulver-Röntgendiffraktogramm erstellt. Dieses ist in Fig. 5 gezeigt. Hierbei wurde, wie vorstehend beschrieben, eine Probe aus der im Betrieb befindlichen Flussbatterie entnommen, jedoch diesmal nicht unter inerten Bedingungen, sondern die Probe wurde an Luft oxidiert. Das entsprechende Pulver-Röntgendiffraktogramm ist wiederum durch gewisse Reflexe, bedingt durch das nicht kristalline Manganoxid, gekennzeichnet, die jedoch erheblich schwächer sind als diejenigen in Fig. 4 für das unter inerter Atmosphäre gewonnene abgeschiedene elementare Mangan. Eine Simulation eines Pulver-Röntgendiffraktogramms von Manganoxid (untere Messlinie), erstellt mit dem gleichen Programm wie vorstehend bei Fig. 4 beschrieben, zeigt eine sehr gute Übereinstimmung mit dem von Reflexen geprägten Manganoxid, gewonnen aus oxidiertem, mit der Flussbatterie in der anodischen Halbzelle abgeschiedenen elementaren Mangan (obere Messlinie). Damit kann die Bildung von Manganoxid als weiterer Beleg für die Abscheidung elementaren Mangans aus der Elektrolytlösung, bestehend aus [BMP]₂[MnCl₄] in Acetonitril, angesehen werden.

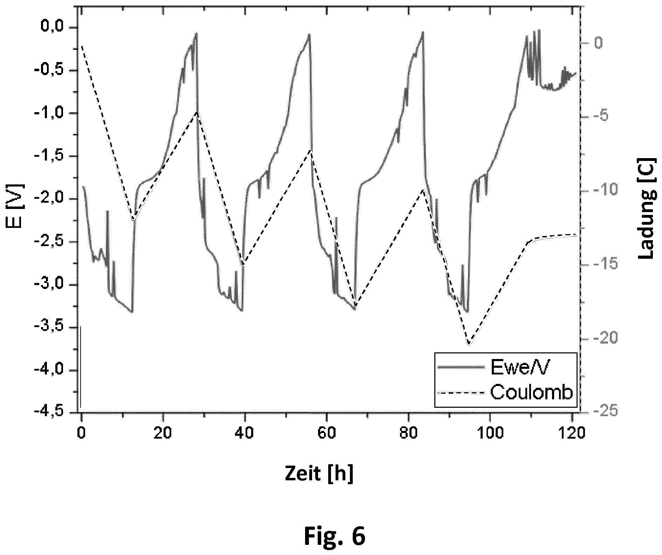

Fig. 6 zeigt schließlich eine erfindungsgemäße Flussbatterie, wie schematisch im Aufbau in Fig. 1 und im Übrigen in Hinblick auf deren Ausstattung zu den Fig. 1 und 2 oben beschrieben, in Betrieb. Dabei wurde die Spannung (durchgezogene Messlinie) bestimmt gegen das Potential der Arbeitselektrode E_{WE}, die aus einem Kohlenstoff-Polymerkomposit-Material, nämlich dem Material TF6 der SGL Carbon SE, Wiesbaden, Deutschland, gefertigt war, bestimmt über eine Zeitdauer von 2 Stunden. Die Referenzelektrode war aus Platin und wurde an die Gegenelektrode gehängt, um die Zellspannung darzustellen. Dabei kann mehr oder weniger dasjenige, was in Fig. 2 weiter oben zum Cyclovoltammogramm beschrieben ist, wiedererkannt werden. Zudem wurde die Ladung gemessen (gestrichelte Messlinie). Grundsätzlich zeigt Fig. 6, dass eine Ladung und Entladung der erfindungsgemäßen Flussbatterie mehrfach möglich ist. Die Ladungseffizienz beträgt etwa 62 % bis etwa 75 %. Diese kann auf etwa 85 % verbessert werden, wenn statt [BMP]₂[MnCl₄] das Salz [N2225]₂[MnCl₄] in Acetonitril eingesetzt wird. Die Bestimmung der Spannung und des Stroms in Fig. 6 erfolgten unter Standardbedingungen für die Temperatur und den Druck, d. h. bei Raumtemperatur von 25°C und leichtem Überdruck von etwa 3 bis etwa 4 mbar.

Mit der vorliegenden Erfindung wird eine Flussbatterie und eine Verwendung eines Salzes mit der allgemeinen Formel [cat]₂[MnHalₙ], aus welchem in einer Flussbatterie metallisches, d. h. elementares Mangan, abgeschieden wird, zur Verfügung gestellt, mit welcher eine Flussbatterie kostengünstig und mit einem vereinfachten Aufbau hergestellt und betrieben werden kann bei gleichzeitig hinreichend großem Potentialfenster und guter Ladungseffizienz.

## Patentansprüche

1. Flussbatterie (10) mit einer anodischen Halbzelle (20) mit Mangan in einer Oxidationsstufe kleiner oder gleich +II und mit einer kathodischen Halbzelle (22) mit Mangan in einer Oxidationsstufe größer gleich +II, wobei die Oxidationsstufen des Mangan in der anodischen Halbzelle (20) und in der kathodischen Halbzelle (22) sich im geladenen Zustand unterscheiden, **dadurch gekennzeichnet, dass** die Flussbatterie (10) einen Elektrolyten umfasst, dieser umfassend mindestens ein Salz mit der allgemeinen Formel [cat]₂[MnHalₙ], wobei [cat] ⁺ für Kation und "Hal" für Sauerstoff, Cyanid, mindestens ein Halogen oder Mischungen dieser steht, n gleich 3, 4 oder 5 ist und für die Anzahl der sich an das Manganatom bindenden Atome steht, und mindestens ein organisches Lösemittel, wobei das Kation [cat] ⁺ ausgewählt ist aus einer Gruppe umfassend Ammoniumkationen und/oder Phosphoniumkationen und wobei Mangan sich in der anodischen Halbzelle abscheidet.

2. Flussbatterie gemäß Anspruch 1, **dadurch gekennzeichnet, dass** das Kation [cat] ⁺ ein symmetrisches oder ein asymmetrisches Kation ist.

3. Flussbatterie gemäß Anspruch 2, **dadurch gekennzeichnet, dass** das Ammoniumkation und/oder Phosphoniumkation die allgemeine Formel N[abcd]⁺ beziehungsweise P[abcd] ⁺, wobei a, b, c und d für lineare oder verzweigte Alkysubstituenten oder Arylsubstituenten mit 1 bis 14 Kohlenstoffatomen steht, wobei in diesen die Heteroatome O, N und P vorkommen können, oder die allgemeine Formel N[xyz] ⁺ beziehungsweise P[xyz] ⁺ aufweist, wobei x und y für lineare oder verzweigte Alkylsubstituenten oder Arylsubstituenten mit 1 bis 14 Kohlenstoffatomen und z für einen cyclischen Alkylsubstituenten mit 4 bis 8 Kohlenstoffatomen steht, wobei in den vorgenannten Substituenten die Heteroatome O, N und P vorkommen können.

4. Flussbatterie gemäß einem oder mehreren der vorgehenden Ansprüche, **dadurch gekennzeichnet, dass** das Kation [cat] ⁺ausgewählt ist aus einer Gruppe umfassend mindestens eine der folgenden Kationen:

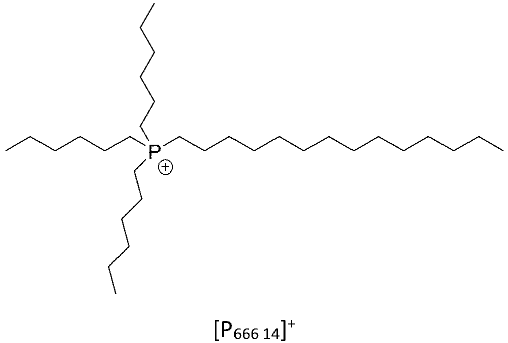

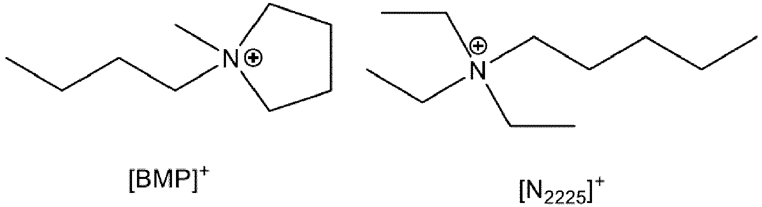

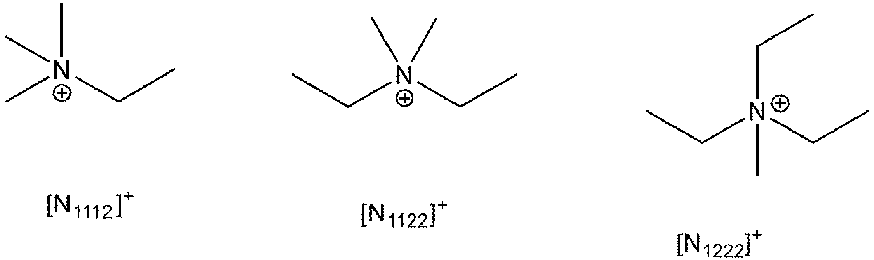

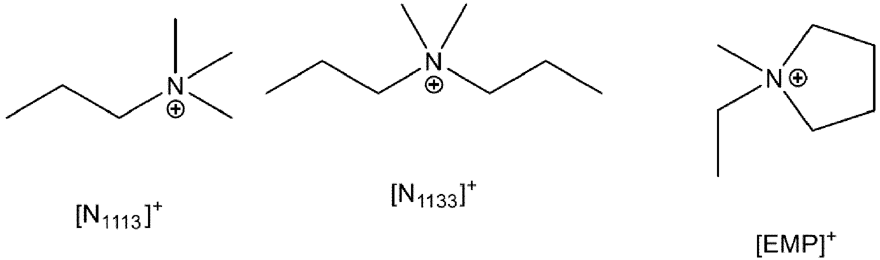

5. Flussbatterie gemäß einem oder mehreren der vorgehenden Ansprüche, **dadurch gekennzeichnet, dass** das Halogen ausgewählt ist aus einer Gruppe umfassend Fluor, Chlor und/oder Brom.

6. Flussbatterie gemäß einem oder mehreren der vorgehenden Ansprüche, **dadurch gekennzeichnet, dass** das mindestens eine Salz eine Konzentration im Elektrolyten in einem Bereich von etwa 1M bis etwa 5M aufweist.

7. Flussbatterie gemäß einem oder mehreren der vorgehenden Ansprüche, **dadurch gekennzeichnet, dass** das mindestens eine organische Lösemittel ausgewählt ist aus einer Gruppe umfassend Aceton, Acetonitril, Methylcyanoacetat, γ-Butyrolacton, Dimethylsulfoxid (DMSO), Dimethylformamid (DMF), Propylencarbonat, N-Methyl-2-pyrrolidon (NMP), Dimethylpropylenharnstoff (DMPU), Propionitril, Triethylamin, Ethylencarbonat/Dimethylcarbonat (EC/DMC) und/oder Dichlormethan.

8. Flussbatterie gemäß einem oder mehreren der vorgehenden Ansprüche, **dadurch gekennzeichnet, dass** zwischen der anodischen Halbzelle (20) und der kathodischen Halbzelle (22) mindestens eine Membran (24) und/oder mindestens ein poröser Separator angeordnet ist.

9. Flussbatterie gemäß Anspruch 8, **dadurch gekennzeichnet, dass** die mindestens eine Membran (24) ausgewählt ist aus einer Gruppe umfassend Anionenaustauschermenbrane, Kationenaustauschermembrane, Nafion, PVDF und/oder PTFE, PE, PP.

10. Flussbatterie gemäß einem oder mehreren der vorgehenden Ansprüche, **dadurch gekennzeichnet, dass** in der anodischen Halbzelle (20) und in der kathodischen Halbzelle (22) jeweils mindestens eine Elektrode (12, 14) angeordnet ist.

11. Flussbatterie gemäß Anspruch 9, **dadurch gekennzeichnet, dass** die mindestens eine Elektrode (12, 14) mindestens ein Material, ausgewählt aus der Gruppe umfassend Graphit, fluoriertes Graphit, porösen Kohlenstoff, Kohlenstoffgewebe, Kohlenstofffilz, Komposite aus Kohlenstoff und Polymer, Platin, Kupfer, Gold, Silber und/oder Palladium, aufweist.

12. Verwendung mindestens eines Elektrolyten, umfassend mindestens ein Salz mit der allgemeinen Formel [cat]₂[MnHalₙ], wobei [cat] ⁺ für Kation und "Hal" für Sauerstoff, Cyanid, mindestens ein Halogen oder Mischung dieser steht und n gleich 3, 4 oder 5 ist und für die Anzahl der sich an das Manganatom bindenden Atome steht, und mindestens ein organisches Lösemittel, wobei das Kation [cat] ⁺ ausgewählt ist aus einer Gruppe umfassend Ammoniumkationen und/oder Phosphoniumkationen, in einer Flussbatterie (10), in der metallisches Mangan abgeschieden wird.

## Claims

1. Redox flow battery (10) including an anodic half-cell (20) with manganese in an oxidation state less than or equal to +11 and a cathodic half-cell (22) with manganese in an oxidation state greater than or equal to +II, wherein the oxidation states of the manganese in the anodic half-cell (20) and in the cathodic half-cell (22) differ in the charged state, **characterized in that** the flow battery (10) comprises an electrolyte comprising at least one salt having the general formula [cat]₂[MnHalₙ], wherein [cat]⁺ represents a cation and "Hal" represents oxygen, cyanide, at least one halogen or a mixture thereof, n is equal to 3, 4 or 5, and represents the number of atoms binding to the manganese atom, and at least one organic solvent, wherein the cation [cat]⁺ is selected from a group comprising ammonium cations and/or phosphonium cations and wherein manganese deposits in the anodic half-cell.

2. Redox flow battery according to claim 1, **characterized in that** the cation [cat]⁺ is a symmetric or an asymmetric cation.

3. Redox flow battery according to claim 2, **characterized in that** the ammonium cation and/or phosphonium cation has the general formula N[abcd]⁺ and P[abcd]⁺, respectively, where a, b, c and d represent linear or branched alkyl substituents or aryl substituents having 1 to 14 carbon atoms, in which the heteroatoms 0, N and P may occur, or has the general formula N[xyz]⁺ and P[xyz]⁺, respectively, where x and y represent linear or branched alkyl substituents or aryl substituents having 1 to 14 carbon atoms and z represents a cyclic alkyl substituent having 4 to 8 carbon atoms, whereby in the aforementioned substituents the heteroatoms 0, N and P may occur.

4. Redox flow battery according to one or more of the preceding claims, **characterized in that** the cation [cat]⁺ is selected from a group comprising at least one of the following cations:

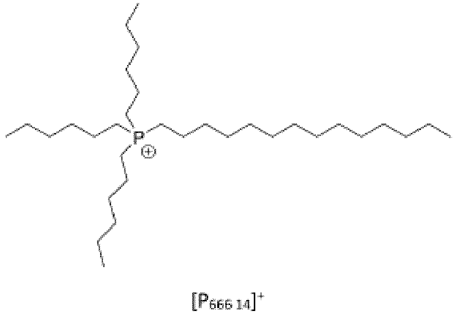

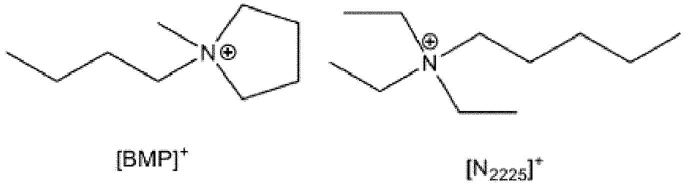

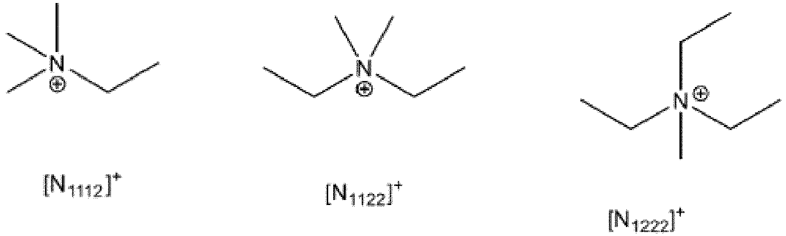

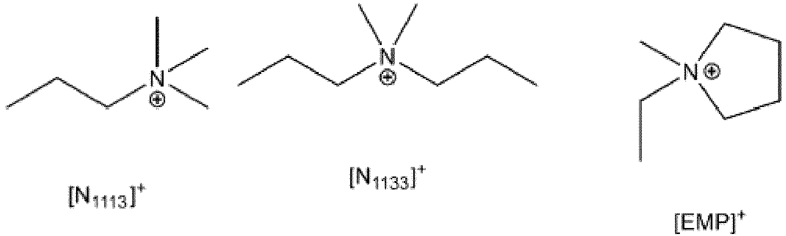

5. Redox flow battery according to one or more of the preceding claims, **characterized in that** the halogen is selected from a group comprising fluorine, chlorine and/or bromine.

6. Redox flow battery according to one or more of the preceding claims, **characterized in that** the at least one salt has a concentration in the electrolyte in a range from about 1M to about 5M.

7. Redox flow battery according to one or more of the preceding claims, **characterized in that** the at least one organic solvent is selected from a group comprising acetone, acetonitrile, methyl cyanoacetate, γ-butyrolactone, dimethylsulfoxide (DMSO), dimethylformamide (DMF), propylene carbonate, N-methyl-2-pyrrolidone (NMP), dimethylpropyleneurea (DMPU), propionitrile, triethylamine, ethylene carbonate/dimethyl carbonate (EC/DMC) and/or dichloromethane.

8. Redox flow battery according to one or more of the preceding claims, **characterized in that** at least one membrane (24) and/or at least one porous separator is arranged between the anodic half-cell (20) and the cathodic half-cell (22).

9. Redox flow battery according to claim 8, **characterized in that** said at least one membrane (24) is selected from a group comprising anion exchange membranes, cation exchange membranes, Nafion, PVDF and/or PTFE, PE, PP.

10. Redox flow battery according to one or more of the preceding claims, **characterized in that** at least one electrode (12, 14) is arranged in each of the anodic half-cell (20) and the cathodic half-cell (22).

11. Redox flow battery according to claim 9, **characterized in that** the at least one electrode (12, 14) has at least one material selected from the group comprising graphite, fluorinated graphite, porous carbon, carbon fabric, carbon felt, composites of carbon and polymer, platinum, copper, gold, silver, and/or palladium.

12. Use of at least one electrolyte comprising at least one salt having the general formula [cat]₂[MnHalₙ], wherein [cat]⁺ represents a cation and "Hal" represents oxygen, cyanide, at least one halogen or mixture thereof and n is equal to 3, 4 or 5 and represents the number of atoms binding to the manganese atom, and at least one organic solvent, wherein the cation [cat]⁺ is selected from a group comprising ammonium cations and/or phosphonium cations, in a redox flow battery (10) in which metallic manganese is deposited.

## Revendications

1. Batterie à flux (10) avec une demi-cellule anodique (20) avec du manganèse dans un état d'oxydation inférieur ou égal à +II et une demi-cellule cathodique (22) avec du manganèse dans un état d'oxydation supérieur ou égal à +II, lesdits états d'oxydation du manganèse dans ladite demi-cellule anodique (20) et dans ladite demi-cellule cathodique (22) différant à l'état chargé, **caractérisée en ce que** ladite batterie à flux (10) comprend un électrolyte comprenant au moins un sel de formule générale [cat]₂[MnHalₙ], dans laquelle [cat]⁺ représente un cation et "Hal" représente l'oxygène, le cyanure, au moins un halogène ou leurs mélanges, n est égal à 3, 4 ou 5 et représente le nombre d'atomes liés à l'atome de manganèse, et au moins un solvant organique, ledit cation [cat]⁺ étant choisi dans un groupe comprenant des cations ammonium et/ou des cations phosphonium et ledit manganèse se déposant dans ladite demi-ligne anodique.

2. Batterie à flux selon la revendication 1, **caractérisée en ce que** ledit cation [cat]⁺ est un cation symétrique ou asymétrique.

3. Batterie à flux selon la revendication 2, **caractérisée en ce que** ledit cation ammonium et/ou ledit cation phosphonium présente la formule générale respectivement N[abcd]+ ou P[abcd]⁺,où a, b, c et d représentent des substituants alkyle linéaires ou ramifiés ou des substituants aryle avec 1 à 14 atomes de carbone, dans laquelle les hétéroatomes O, N et P peuvent figurer, ou présente la formule générale respectivement N[xyz]⁺ ou P[xyz]⁺, où x et y représentent des substituants alkyles linéaires ou ramifiés ou des substituants aryles ayant de 1 à 14 atomes de carbone et z représente un substituant alkyle cyclique ayant de 4 à 8 atomes de carbone, les hétéroatomes O, N et P pouvant figurer dans les substituants susmentionnés.

4. Batterie à écoulement selon une ou plusieurs des revendications précédentes, **caractérisée en ce que** ledit cation [cat]⁺ est choisi dans un groupe comprenant au moins un des cations suivants :

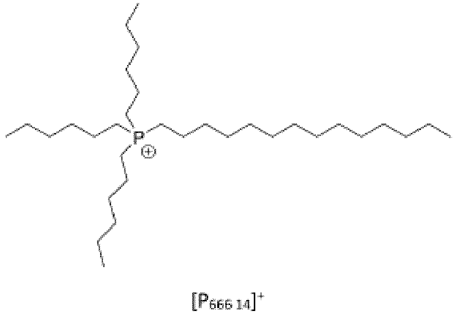

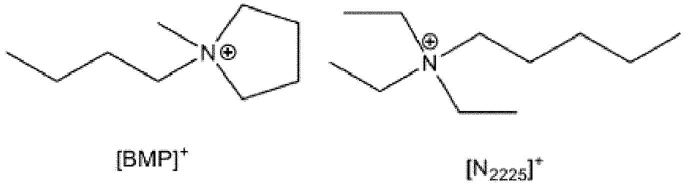

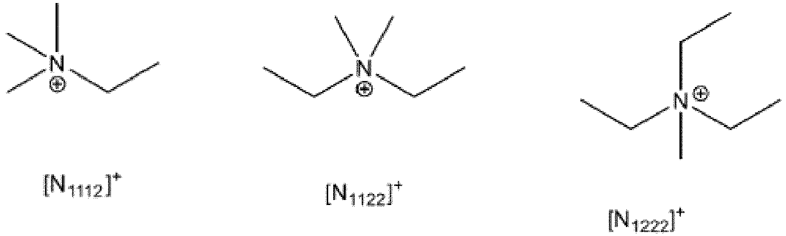

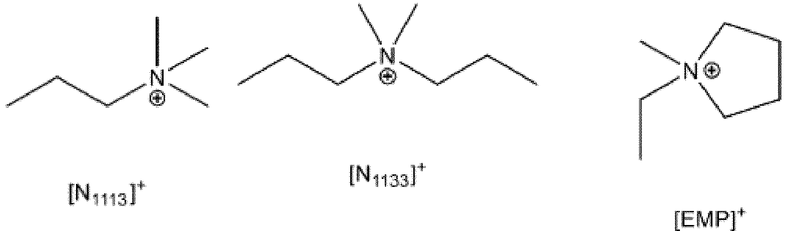

5. Batterie à flux selon une ou plusieurs des revendications précédentes, **caractérisée en ce que** ledit halogène est choisi dans un groupe comprenant fluor, chlore et/ou brome.

6. Batterie à flux selon une ou plusieurs des revendications précédentes, **caractérisée en ce que** le au moins un sel présente une concentration en électrolytes dans une domaine d'environ 1M à environ 5M.

7. Batterie à flux selon une ou plusieurs des revendications précédentes, **caractérisée en ce que** ledit au moins un solvant organique est choisi parmi un groupe comprenant acétone, acétonitrile, cyanoacétate de méthyle, γ-butyrolactone, diméthylsulfoxyde (DMSO), diméthylformamide (DMF), carbonate de propylène, N-méthyl-2-pyrrolidone (NMP), diméthylpropylène urée (DMPU), propionitrile, triéthylamine, carbonate d'éthylène/carbonate de diméthyle (EC/DMC) et/ou dichlorométhane.

8. Batterie à flux selon une ou plusieurs des revendications précédentes, **caractérisée en ce qu'**au moins une membrane (24) et/ou au moins un séparateur poreux est disposé entre ladite demi-cellule anodique (20) et ladite demi-cellule cathodique (22).

9. Batterie à flux selon la revendication 8, **caractérisée en ce que** ladite au moins une membrane (24) est choisie dans un groupe comprenant des membranes échangeuses d'anions, des membranes échangeuses de cations, nafion, PVDF et/ou PTFE, PE, PP.

10. Batterie à flux selon une ou plusieurs des revendications précédentes, **caractérisée en ce qu'**au moins une électrode (12, 14) est disposée dans chacune de ladite demi-cellule anodique (20) et de ladite demi-cellule cathodique (22).

11. Batterie à flux selon la revendication 9, **caractérisée en ce que** ladite au moins une électrode (12, 14) comprend au moins un matériau choisi dans le groupe comprenant graphite, graphite fluoré, carbone poreux, tissu de carbone, feutre de carbone, composites de carbone et de polymère, platine, cuivre, or, argent et/ou palladium.

12. Utilisation d'au moins un électrolyte comprenant au moins un sel avec la formule générale [cat]₂[MnHalₙ], dans laquelle [cat]⁺ représente cation et "Hal" représente l'oxygène, le cyanure, au moins un halogène ou un mélange de ceux-ci et n est égal à 3, 4 ou 5 et représente le nombre d'atomes se liant à l'atome de manganèse, et au moins un solvant organique, ledit cation [cat]⁺ étant choisi parmi un groupe comprenant des cations ammonium et/ou des cations phosphonium, dans une batterie à flux (10) dans laquelle du manganèse métallique est déposé.
